# EUROPÄISCHE PATENTSCHRIFT

(11) **EP 1 625 429 B1**
(45) Veröffentlichungstag und Bekanntmachung des Hinweises auf die Patenterteilung: **15.08.2007**
(21) Anmeldenummer: 04739276.6
(22) Anmeldetag: 19.05.2004
(51) Int. Cl.: G02B 5/02, B60H 1/00, G01S 3/786, G01J 1/04

(54) **SOLARSENSOR MIT MIKROKUGELN AUF DER INNENSEITE DER ABDECKKAPPE**
SOLAR SENSOR COMPRISING MICROBALLS ON THE INTERIOR FACE OF THE CAP
CAPTEUR SOLAIRE PRESENTANT DES MICROBILLES SUR LA FACE INTERIEURE DU CACHE

(30) Priorität: 22.05.2003 DE 10323709
(43) Veröffentlichungstag der Anmeldung: 15.02.2006
(73) Patentinhaber: Preh GmbH, 97616 Bad Neustadt a.d. Saale (DE)
(72) Erfinder: JEITNER, Martin, 97645 Ostheim (DE)
(74) Vertreter: Thul, Hermann
(86) Internationale Anmeldenummer: PCT/EP2004/005448
(87) Internationale Veröffentlichungsnummer: WO 2004/104649

(56) Entgegenhaltungen:
- DE-A- 10 062 932
- DE-U- 20 316 117
- US-A1- 2001 015 846

## Beschreibung

### Technisches Gebiet

Die Erfindung betrifft einen Solarsensor mit einem Wandler und einem darüber befindlichen strahlungsdurchlässigen Bereich, zum Beispiel in einer Kappe oder in einem Gehäuse.

### Stand der Technik

Aus der EP 0 492 352 B1 ist ein Sonnensensor bekannt, der als elektro-optischer Wandler eine lichtempfindliche Fläche aufweist. Die oberhalb des Wandlers befindliche Linse des Sensors ist dabei Teil des Gehäuses, welches wie die Linse aus einem lichtdurchlässigen Material, beispielsweise Kunststoff oder Glas, besteht. Das Linsenmaterial ist selber streuend.

Auch die DE 100 62 932 A1 beschreibt einen Sonnensensor. Der elektro-optische Wandler ist dabei unterhalb eines in einer Abdeckung eingebundenen Streubereichs für das einfallende Sonnenlicht angebracht. Der Streubereich und der elektro-optische Wandler sind derart zueinander angeordnet, dass ein in einem ersten Lichteinfallswinkelbereich einfallendes Sonnenlicht durch den Streubereich gestreut wird, bevor es auf den Wandler auftrifft. Das Sonnenlicht wird dadurch in einem vorgegebenen Winkelbereich gestreut, während es außerhalb dieses Bereiches nicht gestreut wird. Durch die Streuung des Sonnenlichts in dem ersten Winkelbereich wird eine Reduzierung des auf den Wandler auftreffenden Sonnenlichts erzielt, wodurch eine Signalüberhöhung in diesem Winkelbereich vermieden oder reduziert werden soll. Der Streubereich weist eine erhöhte Oberflächenrauigkeit im Vergleich zur verbleibenden Oberfläche der Abdeckung des Sensors auf.

### Darstellung der Erfindung

Die Erfindung stellt sich die Aufgabe, einen Solarsensor aufzuzeigen, der auch bei flachen Einfallswinkel des Sonnenlichts ein zur Sonnenlast im Verhältnis stehendes Signal abgibt.

Gelöst wird die Aufgabe durch die Merkmale des Patentanspruchs 1.

Der Erfindung liegt die Idee zugrunde, die Innenseite einer Abdeckkappe bzw. einer den Wandler des Sensors überdeckenden strahlungsdurchlässigen Bereichs mit Microkugeln zu versehen, die das Licht ebenfalls streuen, aber gleichzeitig eine viel geringere Dämpfung haben. Die Microkugeln werden vorzugsweise in die Oberseite eingeklebt oder eingeschmolzen. Als Kugelmaterial sind Kunststoff oder Glas denkbar. Wichtig ist die Transparenz sowie eine annähernd kugelähnliche Form.

Diese Microkugeln haben eine höhere streuende Wirkung, weil sie durch ihre Form einen großen Anstieg steilerer Flanken gegenüber bekannten Microstrukturen aufweisen. Dies bewirkt stärkere zusätzliche Brechungen, wobei die zusätzliche Brechung beim Eintritt in die Kugel eintritt. Die Microkugeln selbst besitzen eine geringe Absorption bzw. ein geringes Absorptionsverhalten, so dass mit kleineren Empfängerflächen ein vergleichbares Signal erzeugbar wird. Die Streuung ist zudem aufgrund des kontinuierlichen Verlaufs der Rundungen homogen.

Ein Vorteil dieser Lösung liegt darin, dass trotz starker und beabsichtigter Streuwirkung eine hohe Lichtintensität erhalten bleibt.
Ein weiterer Vorteil ergibt sich bei der Herstellung des Sensors. Die Microkugeln können auf der gesamten Innenseite der Kunststoffkappe des Sensors aufgebracht werden. Ein sonst bekanntes Haften am Werkzeug wird vermieden.

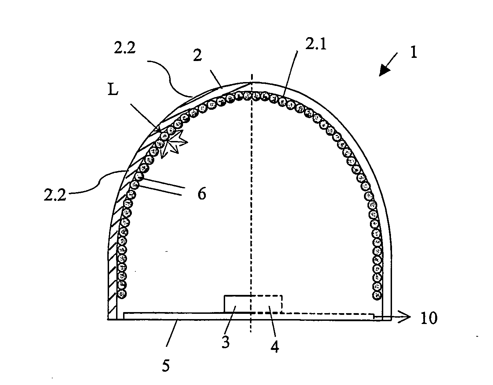

### Kurze Beschreibung der Zeichnung

Anhand eines Ausführungsbeispiels mit Zeichnung soll die Erfindung näher erläutert werden. Es zeigt die einzige Figur eine Abdeckkappe für einen in den wesentlichsten Teilen dargestellten Solarsensor 1 in Teil-Schnittdarstellung.

### Wege zur Ausführung der Erfindung

Der Solarsensor 1 weist ein Gehäuse bzw. eine Kappe 2 auf, welche einen Wandler 3 sowie weitere im Sensor 1 befindliche elektrische Bauelemente 4 und eine Leiterplatte 5 zur Aufnahme und elektrischen Kontaktierung der Bauelemente 3, 4 mit anderen, nicht näher dargestellten elektrischen Baugruppen innerhalb des Sensores 1 bzw. außerhalb des Sensors 1 befindlichen weiteren Baugruppen 10, überdeckt. Im vorliegenden Ausführungsbeispiel stellt die gesamte Kappe 2 einen strahlungsdurchlässigen Bereich 2.2. dar. Möglich ist aber auch ein kleinerer Bereich. Unterhalb dieser Sensorkappe 2, bevorzugt auf deren Innenseite 2.1, befindet sich eine Schicht Microkugeln 6, durch die Licht L nach Durchtritt durch den strahlungsdurchlässigen Bereich 2.2 der Kappe 2 erneut und somit zusätzlich gestreut und auf den Wandler 3 gelenkt wird.

Die Kappe 2 besteht vorzugsweise aus einem Kunststoff oder Glas. Die Microkugeln 6 weisen ein ähnliches oder gleiches Material auf und sind wie die Kappe 2 transparent. Die Form der Microkugeln 6 sollte vorzugsweise kugelförmig zumindest aber kugelähnlich sein.
Die Microkugeln (engl. microspheres) können einen Duchmesser z.B. zwischen 40 µm - 70 µm haben. Andere Größen können genauso wirksam verwendet werden, könnten aber evtl. Probleme bei der Anwendung oder Verarbeitung bereiten. Der oben genannte Durchmesserbereich wird durch Siebung hergestellt und ist über verschiedene Hersteller zu beziehen. Beispielsweise von Potters, SiLi oder Siltrade.

Der Wandler 3 kann ein elektro-optischer, ein Infrarot- oder ein anderer bekannter Wandler sein, der ein der Strahlung äquivalentes elektrisches Signal liefert.

## Patentansprüche

1. Solarsensor mit einem Wandler (3) zur Erzeugung einer der Strahlung äquivalenten elektrichen Signals und einem den Wandler überdeckenden strahlungsdurchlässigen Bereich (2.2) in einer Kappe (2) oder in einem Gehäuse, **dadurch gekennzeichnet, dass** dieser Bereich mit transparenten, eine kugelähnliche Form aufweisenden Microkugeln (6), die einen Durchmesser zwischen 40 µm und 70 µm besitzen, versehen ist, an denen das durch diesen Bereich austretende Licht (L) gestreut und auf den Wandler (3) gelenkt wird und dass die Kugeln (6) in die Innenseite (2.1) des strahlungsdurchlässigen Bereichs (2.2) eingeklebt oder eingeschmolzen sind.

2. Solarsensor nach Anspruch 1, **dadurch gekennzeichnet, dass** die Micokugeln (6) auf der Innenseite des strahlungsdurchlässigen Bereichs eingeklebt sind.

3. Solarsensor nach Anspruch 1, **dadurch gekennzeichnet, dass** die Micokugeln (6) auf der Innenseite des strahlungsdurchlässigen Bereichs eingeschmolzen sind.

4. Solarsensor nach einem der Ansprüche 1 bis 3, **dadurch gekennzeichnet, dass** die Microkugeln (6) als Schicht aufgebracht oder eingeschmolzen sind.

5. Solarsensor nach einem der Ansprüche 1 bis 4, **dadurch gekennzeichnet, dass** die Microkugeln (6) aus Kunststoff oder Glas bestehen.

## Claims

1. Solar sensor having a transducer (3) for generating an electrical signal equivalent to the radiation and a radiation-transparent region (2.2) covering the transducer in a cap (2) or in a housing, **characterized in that** this region is provided with transparent microbeads (6) comprising a shape similar to a sphere which have a diameter of between 40 µm and 70 µm, on which the light (L) emerging from this region is scattered and deviated onto the transducer (3), and **in that** the beads (6) are adhesively bonded or fused into the inner side (2.1) of the radiation-transparent region (2.2).

2. Solar sensor according to Claim 1, **characterized in that** the microbeads (6) are adhesively bonded onto the inner side of the radiation-transparent region.

3. Solar sensor according to Claim 1, **characterized in that** the microbeads (6) are fused onto the inner side of the radiation-transparent region.

4. Solar sensor according to one of Claims 1 to 3, **characterized in that** the microbeads (6) are applied or fused as a layer.

5. Solar sensor according to one of Claims 1 to 4, **characterized in that** the microbeads (6) consist of plastic or glass.

## Revendications

1. Capteur solaire comprenant un convertisseur (3) pour générer un signal électrique équivalent au rayonnement et une zone (2.2) transparente au rayonnement qui recouvre le convertisseur dans un capuchon (2) ou un boîtier, **caractérisé en ce que** cette zone est munie de microbilles (6) transparentes présentant une forme de type sphérique et ayant un diamètre entre 40 µm et 70 µm sur lesquelles la lumière (L) qui sort à travers cette zone est dispersée puis déviée sur le convertisseur (3) et **en ce que** les billes (6) sont collées ou fusionnées dans le côté intérieur (2.1) de la zone (2.2) transparente au rayonnement.

2. Capteur solaire selon la revendication 1, **caractérisé en ce que** les microbilles (6) sont collées sur le côté intérieur de la zone transparente au rayonnement.

3. Capteur solaire selon la revendication 1, **caractérisé en ce que** les microbilles (6) sont fusionnées sur le côté intérieur de la zone transparente au rayonnement.

4. Capteur solaire selon l'une des revendications 1 à 3, **caractérisé en ce que** les microbilles (6) sont appliquées ou fusionnées sous la forme d'une couche.

5. Capteur solaire selon l'une des revendications 1 à 4, **caractérisé en ce que** les microbilles (6) sont en matière plastique ou en verre.
